# EUROPÄISCHE PATENTSCHRIFT

(11) **EP 3 492 951 B1**
(45) Veröffentlichungstag und Bekanntmachung des Hinweises auf die Patenterteilung: **18.03.2020**
(21) Anmeldenummer: 17204655.9
(22) Anmeldetag: 30.11.2017
(51) Int. Cl.: G01V 8/12

(54) **OPTOELEKTRONISCHE VORRICHTUNG**
OPTOELECTRONIC DEVICE
DISPOSITIF OPTOÉLECTRONIQUE

(43) Veröffentlichungstag der Anmeldung: 05.06.2019
(73) Patentinhaber: Leuze electronic GmbH + Co. KG, 73277 Owen/Teck (DE)
(72) Erfinder: FAUTH, Siegfried, 73230 Kirchheim/Teck (DE)
(74) Vertreter: Ruckh, Rainer Gerhard

(56) Entgegenhaltungen:
- WO-A1-00/64049
- DE-A1-102008 030 518
- DE-B4- 10 253 511
- US-A- 5 608 207

## Beschreibung

Die Erfindung betrifft eine optoelektronische Vorrichtung gemäß dem Oberbegriff des Anspruchs 1.

Derartige optoelektronische Vorrichtungen dienen generell zur Erfassung von Objekten in einem Überwachungsbereich.

Generell weist eine solche optoelektronische Vorrichtung wenigstens einen Sendelichtstrahlen emittierenden Sender und wenigstens einen Empfangslichtstrahlen empfangenden Empfänger zur Detektion von Objekten im Überwachungsbereich auf. In einer Auswerteeinheit wird zur Objekterfassung ein binäres Objektfeststellungssignal generiert und über einen Ausgang oder dergleichen ausgegeben.

Zur Gewährleistung einer hinreichenden Nachweisempfindlichkeit werden die Empfangssignale in einer Verstärkereinheit verstärkt, bevor sie in der Auswerteeinheit ausgewertet werden. Vorzugsweise wird der Verstärkungsfaktor, mit welchem die Empfangssignale verstärkt werden, mittels eines Potentiometers eingestellt.

Nachteilig bei derartigen Potentiometern ist, dass mit diesen eine lineare Kennlinie des Verstärkungsfaktors in Abhängigkeit des am Potentiometer manuell vorgebbaren Einstellvorgabewerts erhalten wird.

Da die Intensität der vom Sender emittierten Sendelichtstrahlen eine zum Abstand zur optoelektronischen Vorrichtung reziproke Abhängigkeit aufweist, wirken sich Abstandsänderungen von zu detektierenen Objekten im Nahbereich erheblich stärker auf die Signalamplitude des Empfangssignals aus als Abstandsänderungen von zu detektierenden Objekten im Fernbereich. Durch die lineare Kennliniencharakteristik des Potentiometers entsteht das Problem, dass kleine Änderungen des Einstellvorgabewerts große Pegeländerungen bei Empfangssignalen von Objekten im Nahbereich bewirken.

Dadurch ist in diesem Bereich eine Pegeleinstellung der verstärkten Empfangssignale mit großen Ungenauigkeiten behaftet. Dies erschwert in unerwünschter Weise eine exakte Einstellung der Ansprechempfindlichkeit der optoelektronischen Vorrichtung welche Voraussetzung für eine sichere Objektdetektion ist.

Eine gattungsgemäße optoelektronische Vorrichtung ist aus der DE 102 53 511 B4 bekannt. Die dort beschriebene optoelektronische Vorrichtung dient zur Erfassung von Objekten in einem Überwachungsbereich und weist einen Sendelichtstrahlen emittierenden Sender und einen Empfangslichtstrahlen empfangenden Empfänger auf, dessen Empfangssignale in einer Verstärkereinheit mit einem Verstärkungsfaktor verstärkt und anschließend einer Auswerteeinheit zur Generierung eines Objektfeststellungssignals zugeführt werden. Die Verstärkereinheit weist einen Verstärker zur Verstärkung einer den Empfangssignalen entsprechenden Spannung auf. Die Verstärkereinheit weist als Einstellelement für die Verstärkung der Empfangssignale ein Potentiometer auf, welches in Abhängigkeit eines Einstellvorgabewerts einen Spannungsteiler für die Ausgangsspannung des Verstärkers bildet. Zur Generierung einer nichtlinearen Kennlinie des mit dem Verstärkungsfaktor verstärkten Ausgangssignals der Verstärkereinheit in Abhängigkeit des Einstellvorgabewerts ist das im Potentiometer geteilte Spannungssignal einem Arbeitswiderstand in Form eines Transistors oder Varistors zugeführt. Der Verstärkungsfaktor weist zur Kompensation der Distanzabhängigkeit der Empfangssignale eine quadratische Abhängigkeit des Ausgangssignals vom Einstellvorgabewert auf. Bei dieser optoelektronischen Vorrichtung wird das von dem ersten Einstellelement generierte Ausgangssignal nicht unmittelbar zur Einstellung des Verstärkungsfaktors zur Verstärkung der Empfangssignale des Empfängers eingesetzt. Anstelle dessen dient das Ausgangssignal des ersten Einstellelements zur Generierung eines Ansteuersignals für das zweite Einstellelement, dessen Ausgangssignal den Verstärkungsfaktor vorgibt.

Mit dieser Anordnung kann die Distanzabhängigkeit der Empfangssignale nur teilweise kompensiert werden.

Die US 5 608 207 A betrifft einen optischen Sensor mit einem Lichtstrahlen emittierenden Sender und einem Lichtstrahlen empfangenden Empfänger. Dem Empfänger sind ein Verstärker zur Verteilung seiner Empfangssignale und ein Digitalpotentiometer zur Einstellung der Verstärkung zugeordnet. Das Digitalpotentiometer wird über einen Microcontroller so gesteuert, dass die Verstärkung an vorgegebenen Schwellwerte angepasst wird.

Die DE 10 2008 030 518 A1 betrifft einen optoelektronischen Sensor mit einem Lichtsender zur Aussendung von Lichtsignalen in einen Überwachungsbereich, einem Lichtempfänger zum Empfang von dem Lichtsender ausgesandten Signalen und einer Steuer- und/oder Auswerteeinrichtung zur Ansteuerung des Lichtsenders und zur Erzeugung eines Objektfeststellungssignals im Falle des Vorhandenseins eines Objekts im Überwachungsbereich in Abhängigkeit vom Ausgangssignal des Lichtempfängers. Die Steuer- und/oder Auswerteeinrichtung umfasst zur Verstärkung des Ausgangssignals des Lichtempfängers einen Verstärker und zum Vergleich des verstärkten Ausgangssignals des Lichtempfängers mit einem über ein verstellbares Bedienelement variabel einstellbaren Referenzsignal einen Komparator.

Die WO 00/64049 A1 betrifft eine Handling-Vorrichtung, der ein Digitalpotentiometer zur Einstellung von Kenngrößen zugeordnet ist. Das Digitalpotentiometer kann ferngesteuert sein.

Der Erfindung liegt die Aufgabe zugrunde, eine optoelektronische Vorrichtung der eingangs genannten Art mit einer weiter verbesserten Funktionalität bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine optoelektronische Vorrichtung zur Erfassung von Objekten in einem Überwachungsbereich, mit einem Sendelichtstrahlen emittierenden Sender und einem Empfangslichtstrahlen empfangenden Empfänger, dessen Empfangssignale in einer einen Verstärker aufweisenden Verstärkereinheit mit einem Verstärkungsfaktor verstärkt sind. Die verstärkten Empfangssignale sind einer Auswerteeinheit zugeführt, welche derart ausgebildet ist, in Abhängigkeit der verstärkten Empfangssignale ein Objektfeststellungssignal zu generieren. Als Einstellelement für die Verstärkung der Empfangssignale ist ein Potentiometer vorgesehen. Mit dem Potentiometer ist ein Arbeitswiderstand für den Empfänger ausgebildet. Das Potentiometer ist zugleich auch Bestandteil eines Gegenkopplungsnetzwerks für den Verstärker, wodurch eine nichtlineare Kennlinie für die Abhängigkeit des Verstärkungsfaktors von einem mit dem Potentiometer vorgegebenen Einstellvorgabewert gegeben ist, wobei der Arbeitswiderstand von dem Potentiometer und einem an einem ersten äußeren Anschluss geschalteten Widerstand gebildet ist, und wobei der zweite äußere Anschluss des Potentiometers an Komponenten des Gegenkopplungsnetzwerks angeschlossen ist.

Ein wesentlicher Vorteil der erfindungsgemäßen optoelektronischen Vorrichtung besteht darin, dass durch die Generierung der nichtlinearen Kennlinie des Verstärkungsfaktors abhängig vom Einstellvorgabewert des Potentiometers im gesamten Einstellbereich des Potentiometers eine genaue Einstellung des Verstärkungsfaktors möglich ist. Die Nichtlinearität der Kennlinie kann dabei so vorgegeben werden, dass im gesamten Einstellbereich eine Anpassung an die Signaldynamik erfolgt, so dass über den gesamten Einstellbereich des Potentiometers Änderungen des Einstellvorgabewertes vergleichbare Regeländerungen des Empfangssignals bewirken, so dass stets eine gleichbleibend genaue Einstellung des Verstärkungsfaktors ermöglicht ist.

Dies bedeutet, dass auch bei einer hohen Signaldynamik, das heißt einem großen Variationsbereich der Amplituden der Empfangssignale, insbesondere bedingt durch eine große Variation des Abstands von zu detektierenden Objekten zur optoelektronischen Vorrichtung als auch durch große Remissionsunterschiede der zu detektierenden Objekte, eine genaue Vorgabe des Verstärkungsfaktors mittels des Potentiometers möglich ist. Dennoch wird eine hohe Nachweisempfindlichkeit der optoelektronischen Vorrichtung erzielt.

Ein weiterer Vorteil der Erfindung besteht darin, dass zur Einstellung des Verstärkungsfaktors nur ein geringer konstruktiver Aufwand notwendig ist, da hierfür nur eine geringe Anzahl von kostengünstigen Bauteilen erforderlich ist.

Erfmdungsgemäß wird der Arbeitswiderstand von dem Potentiometer und einem an einem ersten äußeren Anschluss geschalteten Widerstand gebildet.

Dabei ist der zweite äußere Anschluss des Potentiometers an Komponenten des Gegenkopplungsnetzwerks angeschlossen.

Weiterhin sind das Potentiometer und der Widerstand Bestandteil des Gegenkopplungsnetzwerks.

Damit wird eine besonders einfache Schaltungsstruktur zur Generierung der nichtlinearen Kennlinie des Verstärkungsfaktors abhängig von Einstellvorgabewerten generiert. Zur Vorgabe der Einstellvorgabewerte ist dabei zweckmäßig, dass das Potentiometer einen Mittelabgriff aufweist, der mit einem Ruhepotential des Verstärkers verbunden ist.

Im einfachsten nicht-erfindungsgemäßen Fall bildet der Arbeitswiderstand mit dem Potentiometer bereits das gesamte Gegenkopplungsnetzwerk, wodurch ein besonders kompakter Aufbau der Schaltungsanordnung zur Einstellung des Verstärkungsfaktors erzielt wird.

Alternativ weist das Gegenkopplungsnetzwerk zusätzlich einen Widerstand oder einen Widerstand und einen Kondensator auf.

Auch diese zusätzlichen Bauteile zur Ausbildung des Gegenkopplungsnetzwerks erfordern nur einen äußerst geringen Schaltungsaufwand.

Gemäß einer besonders vorteilhaften Ausgestaltung der Erfindung ist zwischen dem Potentiometer und dem Gegenkopplungsnetzwerk ein zusätzlicher Widerstand vorgesehen, mittels dessen die Kennlinie veränderbar ist.

Durch eine geeignete Dimensionierung dieses zusätzlichen Widerstands kann die Nichtlinearität der Kennlinie des Verstärkungsfaktors in Abhängigkeit des Einstellvorgabewertes besonders genau an die Signaldynamik der Empfangssignale angepasst werden.

Besonders vorteilhaft ist das Potentiometer ein digitales Potentiometer.

In diesem Fall ist eine ferngesteuerte Bedienung des Potentiometers möglich. Dies ist insbesondere dann vorteilhaft, wenn die optoelektronische Vorrichtung in schwer zugänglichen Einbauorten positioniert ist.

Alternativ kann das Potentiometer fernsteuerbar sein.

Gemäß einer ersten Variante kann der Verstärker von einem gegengekoppelten Transistor gebildet sein.

Alternativ kann der Verstärker von einem gegengekoppelten Operationsverstärker gebildet sein.

In beiden Fällen besteht der Verstärker aus einem einzigen Standard-Bauteil, das kostengünstig in großen Stückzahlen erhältlich ist.

Prinzipiell kann mit der optoelektronischen Vorrichtung ein analoges Objektfeststellungssignal generiert werden.

Besonders vorteilhaft kann mittels der Auswerteeinheit ein binäres Objektfeststellungssignal generiert werden.

Das binäre Objektfeststellungssignal weist zwei Schaltzustände auf, die angeben, ob ein Objekt im Überwachungsbereich vorhanden ist oder nicht. Die Generierung des binären Objektfeststellungssignals erfolgt in der Auswerteeinheit durch eine Schwellwertbewertung des Empfangssignals. Im einfachsten Fall wird nur ein Schwellwert zur Bewertung des Empfangssignals herangezogen. Alternativ können zwei Schwellwerte verwendet werden, wobei der Abstand der Schwellwerte eine Schalthysterese definiert.

Optoelektronische Vorrichtungen, welche binäre Objektfeststellungssignale generieren, können beispielsweise als Lichtschranke, Lichttaster oder als Reflexionslichtschranke ausgebildet sein.

Derartige optoelektronische Vorrichtungen weisen generell nur einen Empfänger und vorzugsweise nur einen Sender auf.

Die vorliegende Erfindung ist jedoch hierauf nicht beschränkt. Generell kann die optoelektronische Vorrichtung auch mehrere Empfänger aufweisen, welchen vorzugsweise mehrere Sender zugeordnet sind.

Beispiele hierfür sind optoelektronische Vorrichtungen, welche als Lichtvorhang, Reflexionslichtvorhang oder als mehrstrahlige Einweglichtschranke ausgebildet sind.

In diesen Fällen wird vorteilhaft mit der erfindungsgemäßen Verstärkereinheit der Verstärkungsfaktor für alle Empfänger der optoelektronischen Vorrichtung eingestellt.

Die Erfindung wird im Folgenden anhand der Zeichnungen erläutert. Es zeigen:
- Figur 1:: Schematische Darstellung eines Ausführungsbeispiels der erfindungsgemäßen optoelektronischen Vorrichtung.
- Figur 2:: Erstes Ausführungsbeispiel einer Verstärkereinheit für die optoelektronische Vorrichtung gemäß Figur 1.
- Figur 3:: Zweites Ausführungsbeispiel einer Verstärkereinheit für die optoelektronische Vorrichtung gemäß Figur 1.
- Figur 4:: Drittes Ausführungsbeispiel einer Verstärkereinheit für die optoelektronische Vorrichtung gemäß Figur 1.
- Figur 5:: Kennlinie des Verstärkungsfaktors in Abhängigkeit eines Einstellvorgabewerts eines Potentiometers für eine optoelektronische Vorrichtung gemäß dem Stand der Technik (lineare Darstellung).
- Figur 6:: Kennlinie gemäß Figur 5 in logarithmischer Darstellung.
- Figur 7:: Abhängigkeit des Fotostroms des Empfängers von der Potentiometer-Stellung für eine aus dem Stand der Technik bekannte optoelektronische Vorrichtung in logarithmischer Darstellung.
- Figur 8:: Kennlinie des Verstärkungsfaktors in Abhängigkeit eines Einstellvorgabewerts eines Potentiometers für die erfindungsgemäße optoelektronische Vorrichtung gemäß Figur 1.
- Figur 9:: Kennlinie gemäß Figur 5 in logarithmischer Darstellung.
- Figur 10:: Abhängigkeit des Fotostroms des Empfängers von der Poteniometer-Stellung für die erfindungsgemäße optoelektronische Vorrichtung in logarithmischer Darstellung.
- Figur 11:: Vergleichende Darstellung der Kennlinien gemäß den Figuren 7 und 10.

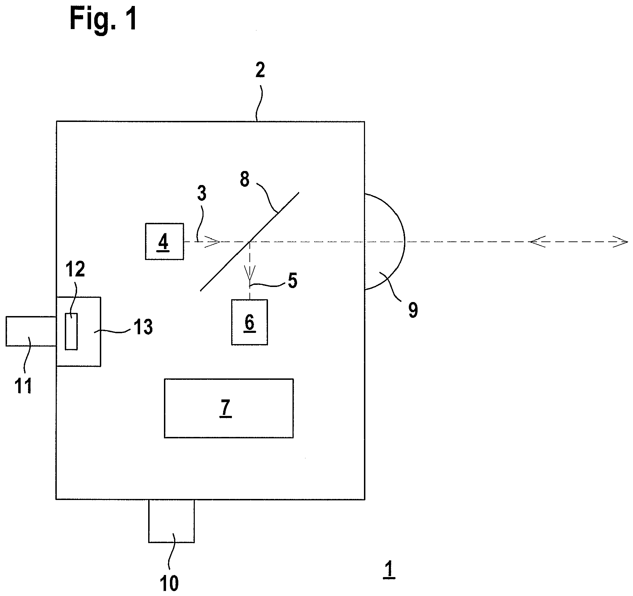

Figur 1 zeigt ein Ausführungsbeispiel der erfindungsgemäßen optoelektronischen Vorrichtung 1 zur Erkennung von Objekten in einem Überwachungsbereich. Die optoelektronische Vorrichtung 1 gemäß Figur 1 ist als Lichttaster ausgebildet, deren Sensorkomponenten in einem Gehäuse 2 angeordnet sind. Die optoelektronische Vorrichtung 1 weist einen Sendelichtstrahlen 3 emittierenden Sender 4 und einen Empfangslichtstrahlen 5 empfangenden Empfänger 6 auf. Der Sender 4 kann von einer Leuchtdiode gebildet sein. Der Empfänger 6 besteht beispielsweise aus einer Fotodiode. Weiterhin ist eine Auswerteeinheit 7 zur Steuerung des Senders 4 und zur Auswertung von am Ausgang des Empfängers 6 anstehenden Empfangssignalen vorgesehen. Dem Sender 4 und Empfänger 6 wird ein Strahlteilerspiegel 8 angeordnet, über welchen die Sendelichtstrahlen 3 und Empfangslichtstrahlen 5 geführt werden, so dass diese koaxial im Überwachungsbereich verlaufen. Dabei sind die Sendelichtstrahlen 3 und Empfangslichtstrahlen 5 über eine Optik 9 geführt, die in einer Gehäusewand integriert ist. Die in den Überwachungsbereich geführten Sendelichtstrahlen 3 werden an einem nicht dargestellten Objekt reflektiert und als Empfangslichtstrahlen 5 zum Empfänger 6 geführt. In der Auswerteeinheit 7 erfolgt eine Bewertung der Empfangssignale mit einem Schwellwert, wodurch ein binäres Objektfeststellungssignal generiert wird. Die Schaltzustände des Objektfeststellungssignals geben an, ob ein Objekt innerhalb eines von einer Tastweite begrenzten Bereichs vorhanden ist oder nicht. Die Tastweite ist durch die Höhe des Schwellwerts bestimmt.

Das binäre Objektfeststellungssignal wird über eine Ausgangsleitung in einem Stecker 10 aus der optoelektronischen Vorrichtung 1 herausgeführt. Der Stecker 10 dient auch zur Stromversorgung der optoelektronischen Vorrichtung 1.

Zur Einstellung der Ansprechempfindlichkeit ist ein an der Außenseite des Gehäuses 2 zugängliches Bedienelement 11 vorgesehen, mit dem ein Potentiometer 12 einer Verstärkereinheit 13 eingestellt werden kann, um so die Verstärkung der Empfangssignale einstellen zu können. Das Potentiometer 12 ist bevorzugt ein digitales Potentiometer 12. Prinzipiell kann das digitale Potentiometer 12 auch ferngesteuert betätigt werden.

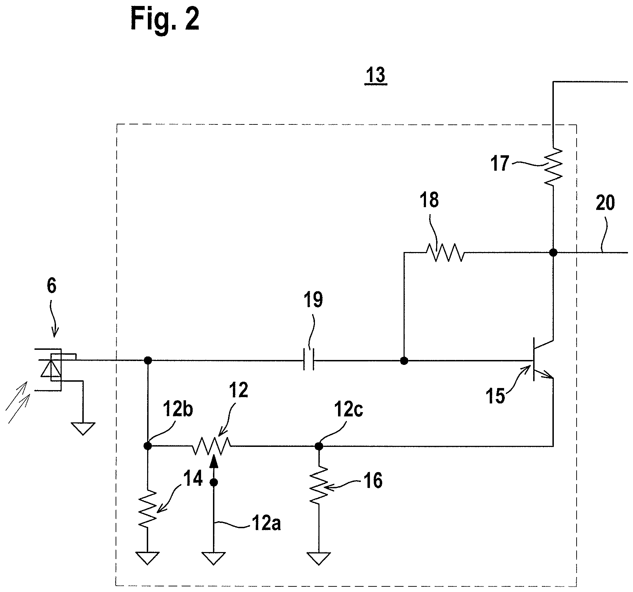

Figur 2 zeigt ein erstes Beispiel einer Verstärkereinheit 13 für die optoelektronische Vorrichtung 1 gemäß Figur 1. Wie Figur 1 zeigt, liegt ein Anschluss des Empfängers 6 sowie der Mittelabgriff 12a des Potentiometers 12 auf einem Ruhepotentional 0.

An einem ersten äußeren Anschluss 12b des Potentiometers 12 ist ein Widerstand 14 geschaltet, der mit dem Potentiometer 12 einen Arbeitswiderstand für den Fotostrom des Empfängers 6 bildet. Der Widerstand 14 und das Potentiometer 12 bilden zugleich ein Gegenkopplungsnetzwerk für einen Verstärker, der im vorliegenden Fall von einem Transistor 15 gebildet ist. Der zweite äußere Anschluss ist über einen zusätzlichen Widerstand 16 zum Emitter des Transistors 15 geführt. Die Verstärkereinheit 13 umfasst als weitere Bauteile zwei Widerstände 17, 18 und einen Kondensator 19.

Mit der so ausgebildeten Verstärkereinheit 13 erfolgt eine Verstärkung der am Ausgang des Empfängers 6 verstärkten Empfangssignale. Das mit einem Verstärkungsfaktor in der Verstärkereinheit 13 verstärkte Empfangssignal wird über eine Ausgangsleitung 20 der Verstärkereinheit 13 der Auswerteeinheit 7 zugeführt, in welcher in Abhängigkeit dieser verstärkten Empfangssignale das Objektfeststellungssignal generiert wird.

Der Verstärkungsfaktor kann durch Betätigen des Bedienelements 11 und eine dadurch bewirkte Einstellung des Potentiometers 12 eingestellt werden.

Erfindungsgemäß bildet das Potentiometer 12 mit dem Widerstand 16 sowohl den Arbeitswiderstand für den Empfänger 6 als auch ein Gegenkopplungsnetzwerk für den vom Transistor 15 gebildeten Verstärker. Dadurch wird eine nichtlineare Kennlinie des Verstärkungsfaktors in Abhängigkeit eines mit dem Bedienelement 11 vorgebbaren Einstellvorgabewert erhalten.

Im vorliegenden Fall kann die Nichtlinearität mit der Kennlinie durch eine geeignete Dimensionierung des Widerstands 16 vorgegeben werden.

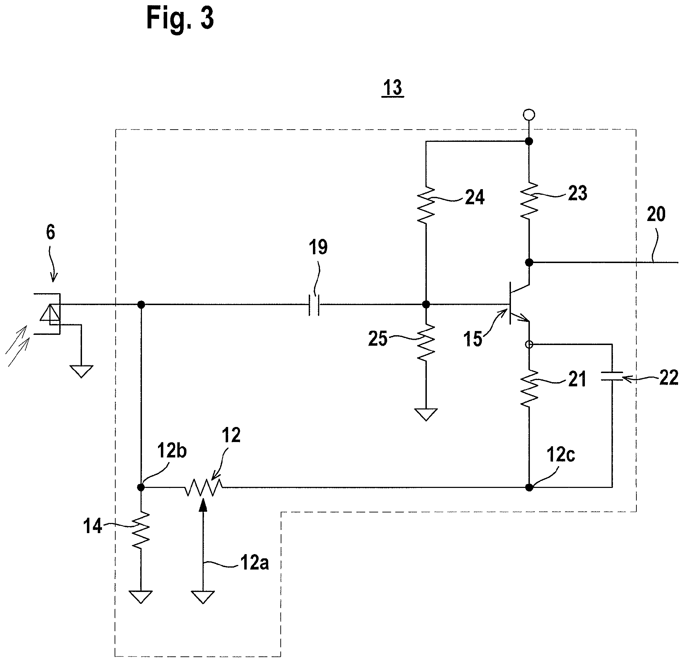

Figur 3 zeigt eine Variante der Verstärkereinheit 13 gemäß Figur 2. Entsprechende gleiche Bauteile sind in den Figuren 1 und 2 mit gleichen Bezugsziffern gekennzeichnet. Auch bei der Ausführungsform gemäß Figur 3 bildet das Potentiometer 12 mit dem Widerstand 14 den Arbeitswiderstand für den Empfänger 6. Weiterhin bildet das Potentiometer 12 mit dem Widerstand 14 sowie einem Widerstand 21 und einem Kondensator 22 ein Gegenkopplungsnetzwerk für den Verstärker, der wiederum von dem Transistor 15 gebildet ist. Der Widerstand 16 zur weiteren Dimensionierung der Nichtlinearität der Kennlinie des Verstärkungsfaktors entfällt. Dem Transistor 15 werden als weitere Bauteile der Kondensator 19 und Widerstände 23, 24, 25 zugeschaltet.

Mit der Verstärkereinheit 13 gemäß Figur 3 wird wie mit der Verstärkereinheit 13 gemäß Figur 2 eine nichtlineare Kennlinie des Verstärkungsfaktors in Abhängigkeit des mit dem Bedienelement 11 vorgebbaren Einstellvorgabewerts des Potentiometers 12 erhalten.

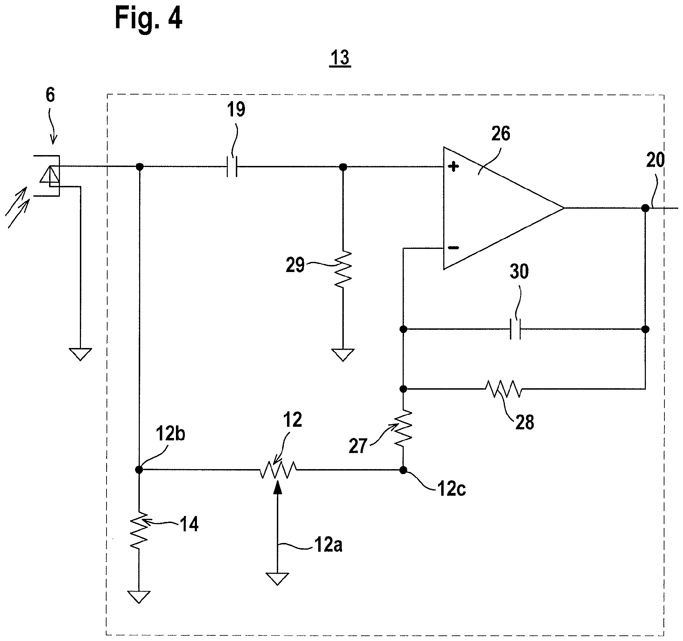

Figur 4 zeigt eine weitere Variante der Verstärkereinheit 13. Entsprechend gleiche Bauteile sind in den Figuren 1 bis 3 mit gleichen Bezugsziffern gekennzeichnet. Bei der Ausführungsform gemäß Figur 4 bildet, wie bei den Ausführungsformen der Figuren 2 und 3 das Potentiometer 12 mit dem Widerstand 14 den Arbeitswiderstand für den Empfänger 6 und ist zugleich Bestandteil des Gegenkopplungsnetzwerks für den Verstärker, der im vorliegenden Fall von einem Operationsverstärker 26 gebildet ist.

Analog zur Ausführungsform gemäß Figur 3 bilden das Potentiometer 12 und der Widerstand 14 den Arbeitswiderstand für den Empfänger 6 und sind zugleich Bestandteil des Gegenkopplungsnetzwerks für den Verstärker, wobei zu dem Gegenkopplungsnetzwerk zusätzlich der Widerstand 27 gehört.

Die dem Operationsverstärker 26 weiter zugeschalteten Bauteile sind von dem Kondensator 19 sowie weiteren Widerständen 28, 29 und einem Kondensator 30 gebildet.

Auch mit der Verstärkereinheit 13 gemäß Figur 4 wird eine nichtlineare Kennlinie des Verstärkungsfaktors in Abhängigkeit des Einstellvorgabewerts enthalten.

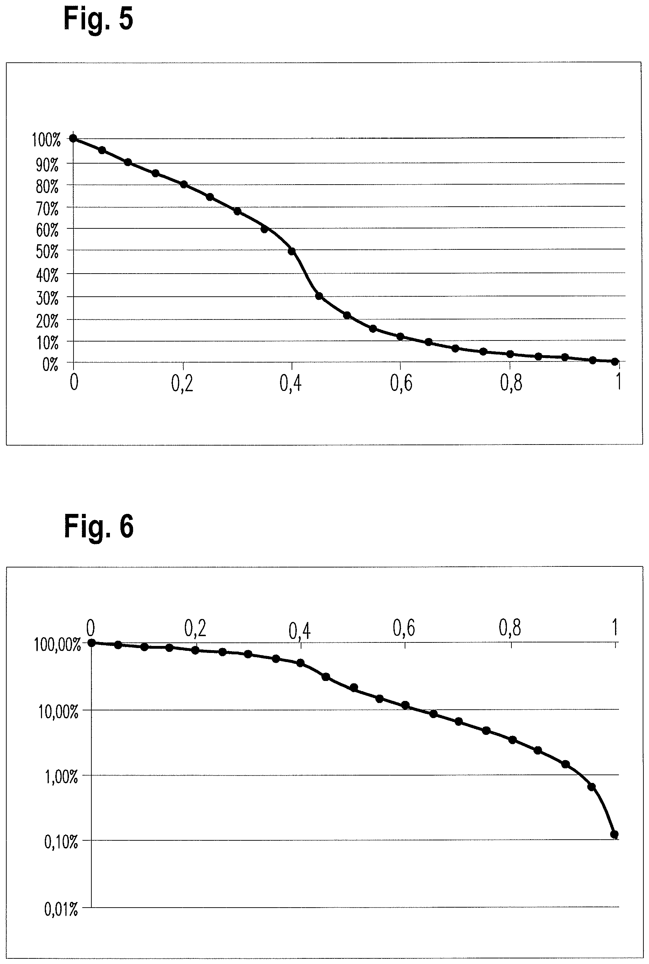

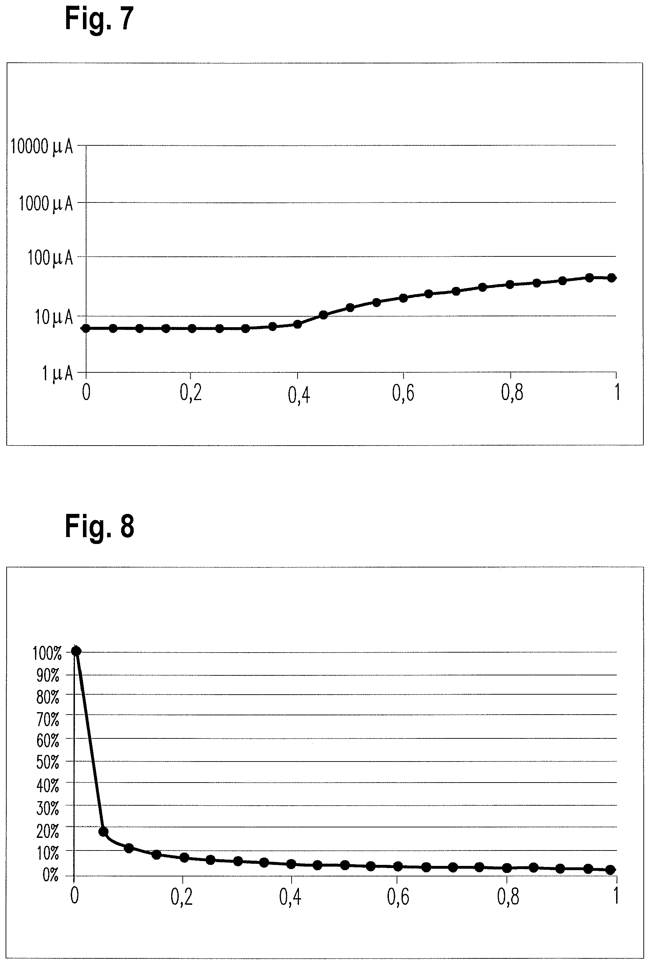

Typische Kennlinien, die mit den Verstärkereinheiten 13 der Figuren 2 und 3 erhalten werden, zeigen die Figuren 8 bis 11. Diese werden im Folgenden vergleichend zu den aus dem Stand der Technik bekannten Kennlinien gemäß den Figuren 5 bis 7 diskutiert. Dabei zeigen die Figuren 5 bis 7 Kennlinien, wie sie für die aus der DE 102 53 511 B4 bekannten optoelektronischen Vorrichtung 1 erhalten werden.

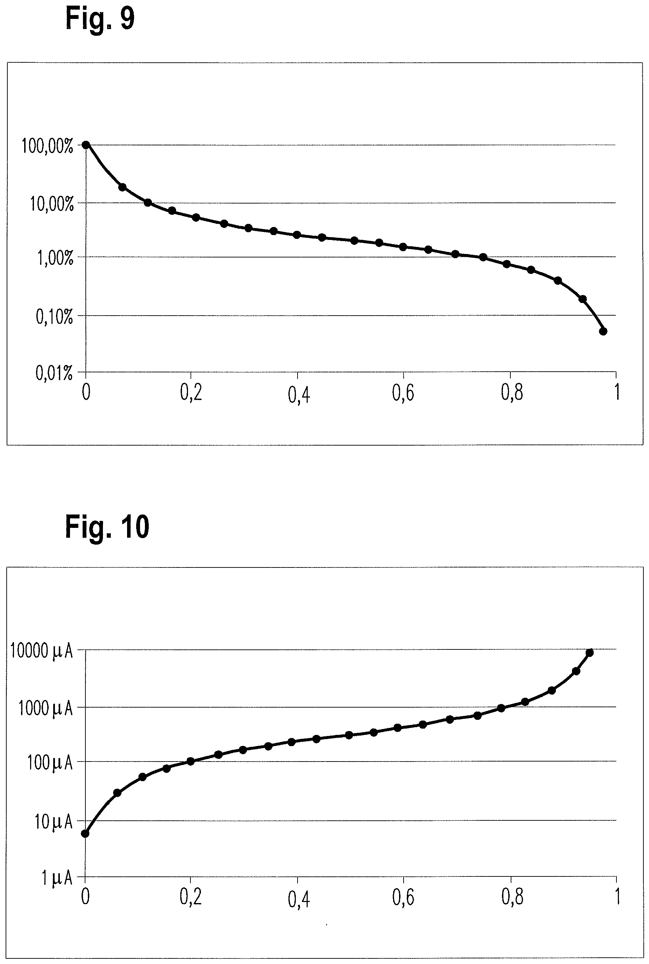

Die Figuren 8 und 9 zeigen die Einstellkennlinie der erfindungsgemäßen optoelektronischen Vorrichtung 1, das heißt die mit der Verstärkereinheit 13 bewirkte Verstärkung in Abhängigkeit der Potentiometer-Stellung und damit in Abhängigkeit des Einstellvorgabewerts für das Potentiometer 12. Die Figuren 5 und 6 zeigen die entsprechenden Einstellkennlinien für die optoelektronische Vorrichtung 1 gemäß dem Stand der Technik. Dabei zeigen die Figuren 5 und 8 die Einstellkennlinien in linearer Darstellung, während die Figuren 6 und 9 die Einstellkennlinie in logarithmischer Darstellung zeigen.

In den Figuren 5, 6 und 8, 9 bedeutet der Wert 100% der Verstärkung, dass das Empfangssignal in der Verstärkereinheit 13 nicht abgeschwächt wird, während bei 0% eine volle Abschwächung des Empfangssignals erhalten wird.

Bei der Potentiometerstellung 0 ist bei der erfindungsgemäßen optoelektronischen Vorrichtung 1 keine Gegenkopplung des Verstärkers gegeben, wogegen bei der Potentiometer-Stellung 1 die volle Gegenkopplung des Verstärkers gegeben ist.

Wie der Vergleich der Figuren 8 und 9 zu den Figuren 5 und 6 zeigt, ergibt sich bei der erfindungsgemäßen optoelektronischen Vorrichtung 1 bei kleinen Werten der Potentiometer-Stellung (0 bis 0,1) eine hohe Änderung der Verstärkung. Dadurch ergibt sich gegenüber der optoelektronischen Vorrichtung 1 gemäß dem Stand der Technik (Figuren 5 und 6) als Vorteil, dass sich für große Empfangssignale ein zweiter Einstellbereich auf dem Potentiometer 12 ergibt, so dass auch in diesem Bereich eine exakte Einstellung der Anspruchsempfindlichkeit mit dem Potentiometer 12 möglich ist.

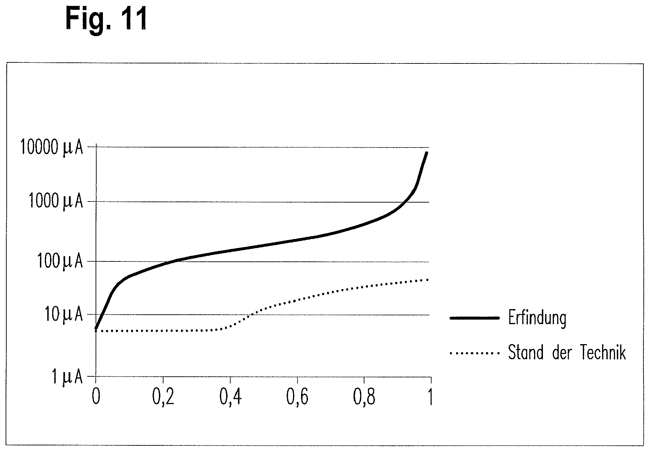

Figur 10 zeigt die Abhängigkeit des Fotostroms des Empfängers 6 am Ausgang der Verstärkungseinheit 13 von der Potentiometer-Stellung in logarithmischer Darstellung für die erfindungsgemäße optoelektronische Vorrichtung 1. Figur 7 zeigt die entsprechende Kennlinie für die aus dem Stand der Technik bekannte optoelektronischen Vorrichtung 1. Figur 11 zeigt beide Kennlinien im direkten Vergleich.

Bei der optoelektronischen Vorrichtung 1 gemäß dem Stand der Technik ergibt sich aufgrund der Übersteuerung des Verstärkers eine Begrenzung des Fotostroms, das heißt für große Werte der Potentiometer-Stellung steigt der Fotostrom nicht mehr an, wodurch keine präzise Einstellung der Ansprechmöglichkeiten der optoelektronischen Vorrichtung 1 mehr möglich ist.

Dieser Nachteil wird bei der erfindungsgemäßen optoelektronischen Vorrichtung 1 vermieden. Durch die mit dem Gegenkopplungsnetzwerk erzielte Gegenkopplung wird ein Sättigungsverhalten des Fotostroms vermieden, das heißt auch bei hohen Werten der Potentiometer-Stellung (oberhalb von 0,8) ergibt sich auch ein starker Anstieg des Fotostroms bei einer Änderung der Potentiometer-Stellung, so dass auch in diesem Bereich noch eine exakte Einstellung der Anspruchsempfindlichkeiten der optoelektronischen Vorrichtung 1 möglich ist.

### Bezugszeichenliste

- (1): Optoelektronische Vorrichtung
- (2): Gehäuse
- (3): Sendelichtstrahlen
- (4): Sender
- (5): Empfangslichtstrahlen
- (6): Empfänger
- (7): Auswerteeinheit
- (8): Strahlteilerspiegel
- (9): Optik
- (10): Stecker
- (11): Bedienelement
- (12): Potentiometer
- (12a): Mittelabgriff
- (12b): Anschluss
- (13): Verstärkereinheit
- (14): Widerstand
- (15): Transistor
- (16): Widerstand
- (17): Widerstand
- (18): Widerstand
- (19): Kondensator
- (20): Ausgangsleitung
- (21): Widerstand
- (22): Kondensator
- (23): Widerstand
- (24): Widerstand
- (25): Widerstand
- (26): Operationsverstärker
- (27): Widerstand
- (28): Widerstand
- (29): Widerstand
- (30): Kondensator

## Patentansprüche

1. Optoelektronische Vorrichtung (1) zur Erfassung von Objekten in einem Überwachungsbereich, mit einem Sendelichtstrahlen (3) emittierenden Sender (4) und einem Empfangslichtstrahlen (5) empfangenden Empfänger (6), dessen Empfangssignale in einer einen Verstärker aufweisenden Verstärkereinheit (13) mit einem Verstärkungsfaktor verstärkt sind, wobei die verstärkten Empfangssignale einer Auswerteeinheit (7) zugeführt sind, welche ausgebildet ist, in Abhängigkeit der verstärkten Empfangssignale ein Objektfeststellungssignal zu generieren und wobei als Einstellelement für die Verstärkung der Empfangssignale ein Potentiometer (12) vorgesehen ist, **dadurch gekennzeichnet, dass** mit dem Potentiometer (12) ein Arbeitswiderstand für den Empfänger (6) ausgebildet ist und das Potentiometer (12) zugleich auch Bestandteil eines Gegenkopplungsnetzwerks für den Verstärker ist, wodurch eine nichtlineare Kennlinie für die Abhängigkeit des Verstärkungsfaktors von einem mit dem Potentiometer (12) vorgegebenen Einstellvorgabewert ist, wobei der Arbeitswiderstand von dem Potentiometer (12) und einem an einem ersten äußeren Anschluss geschalteten Widerstand (14) gebildet ist, und wobei der zweite äußere Anschluss des Potentiometers (12) an Komponenten des Gegenkopplungsnetzwerks angeschlossen ist.

2. Optoelektronische Vorrichtung (1) nach Anspruch 1, **dadurch gekennzeichnet, dass** das Potentiometer (12) und der Widerstand (14) Bestandteil des Gegenkopplungsnetzwerks sind.

3. Optoelektronische Vorrichtung (1) nach Anspruch 2, **dadurch gekennzeichnet, dass** das Gegenkopplungsnetzwerk zusätzlich einen Widerstand (27) oder einen Widerstand (21) und einen Kondensator (22) aufweist.

4. Optoelektronische Vorrichtung (1) nach einem der Ansprüche 1 bis 3, **dadurch gekennzeichnet, dass** in Parallelschaltung zum Potentiometer (12) ein zusätzlicher Widerstand (16) vorgesehen ist, mittels dessen die Kennlinie veränderbar ist.

5. Optoelektronische Vorrichtung (1) nach einem der Ansprüche 1 bis 4, **dadurch gekennzeichnet, dass** das Potentiometer (12) einen Mittelabgriff (12a) aufweist, der mit einem Ruhepotential des Verstärkers verbunden ist.

6. Optoelektronische Vorrichtung (1) nach einem der Ansprüche 1 bis 5, **dadurch gekennzeichnet, dass** das Potentiometer (12) ein digitales Potentiometer (12) ist.

7. Optoelektronische Vorrichtung (1) nach Anspruch 6, **dadurch gekennzeichnet, dass** das Potentiometer (12) fernsteuerbar ist.

8. Optoelektronische Vorrichtung (1) nach einem der Ansprüche 1 bis 7, **dadurch gekennzeichnet, dass** das Potentiometer (12) mittels eines Bedienelements manuell betätigbar ist.

9. Optoelektronische Vorrichtung (1) nach einem der Ansprüche 1 bis 8, **dadurch gekennzeichnet, dass** der Verstärker von einem gegengekoppelten Transistor (15) gebildet ist.

10. Optoelektronische Vorrichtung (1) nach einem der Ansprüche 1 bis 9, **dadurch gekennzeichnet, dass** der Verstärker von einem gegengekoppelten Operationsverstärker (26) gebildet ist.

11. Optoelektronische Vorrichtung (1) nach einem der Ansprüche 1 bis 10, **dadurch gekennzeichnet, dass** mittels der Auswerteeinheit ein binäres Objektfeststellungssignal generiert wird.

12. Optoelektronische Vorrichtung (1) nach einem der Ansprüche 1 bis 11, **dadurch gekennzeichnet, dass** diese als Lichtschranke, Lichttaster oder als Reflexionslichtschranke ausgebildet ist.

13. Optoelektronische Vorrichtung (1) nach einem der Ansprüche 1 bis 12, **dadurch gekennzeichnet, dass** diese als Lichtvorhang, Reflexionslichtvorhang oder als mehrstrahlige Einweglichtschranke ausgebildet ist.

## Claims

1. Optoelectronic device (1) for detecting objects in a monitored area, having a transmitter (4) emitting transmitted light beams (3) and a receiver (6) receiving received light beams (5), the received signals of which are amplified with a gain factor in an amplifier unit (13) having an amplifier, in which the amplified received signals are fed to an evaluation unit (7) which is designed to generate an object detection signal as a function of the amplified received signals, and a potentiometer (12) being provided as an adjusting element for amplifying the received signals, **characterised in that** a working resistor for the receiver (6) is formed with the potentiometer (12) and the potentiometer (12) is at the same time also a component of a feedback network for the amplifier, whereby a non-linear characteristic for the dependence of the amplification factor on a setting predetermined with the potentiometer (12) is preset, wherein the operating voltage is formed by the potentiometer (12) and a resistor (14) connected to a first external terminal, and wherein the second external terminal of the potentiometer (12) is connected to components of the feedback network.

2. The optoelectronic device (1) according to claim 1, **characterised in that** the potentiometer (12) and the resistor (14) are part of the feedback network.

3. The optoelectronic device (1) according to claim 2, **characterised in that** the feedback network additionally comprises a resistor (27) or a resistor (21) and a capacitor (22).

4. The optoelectronic device (1) according to one of claims 1 to 3, **characterised in that** an additional resistor (16) is provided in parallel with the potentiometer (12), by means of which the characteristic curve can be changed.

5. The optoelectronic device (1) according to one of claims 1 to 4, **characterised in that** the potentiometer (12) has a centre tap (12a) which is connected to a rest potential of the amplifier.

6. The optoelectronic device (1) according to one of claims 1 to 5, **characterized in that** the potentiometer (12) is a digital potentiometer (12).

7. The optoelectronic device (1) according to claim 6, **characterised in that** the potentiometer (12) is remotely controllable.

8. The optoelectronic device (1) according to any one of claims 1 to 7, **characterised in that** the potentiometer (12) is manually operable by means of an operating element.

9. The optoelectronic device (1) according to one of claims 1 to 8, **characterised in that** the amplifier is formed by a negative feedback transistor (15).

10. The optoelectronic device (1) according to one of claims 1 to 9, **characterised in that** the amplifier is formed by a negative feedback operational amplifier (26).

11. The optoelectronic device (1) according to one of claims 1 to 10, **characterised in that** a binary object detection signal is generated by means of the evaluation unit.

12. The optoelectronic device (1) according to one of claims 1 to 11, **characterised in that** it is formed as a light barrier, light scanner or as a reflection light barrier.

13. The optoelectronic device (1) according to one of claims 1 to 12, **characterised in that** it is designed as a light curtain, reflective light curtain or as a multi-beam through-beam light barrier.

## Revendications

1. Dispositif optoélectronique (1) pour la détection d'objets dans une zone surveillée, comprenant un émetteur (4) émettant des rayons lumineux d'émission (3) et un récepteur (6) recevant des rayons lumineux de réception (5), dont les signaux de réception sont amplifiés avec un facteur d'amplification dans une unité d'amplification (13) comportant un amplificateur, dans lequel les signaux de réception amplifiés sont amenés à une unité d'évaluation (7) qui est conçue pour générer un signal de détection d'objet en fonction des signaux de réception amplifiés, et un potentiomètre (12) étant prévu comme élément de réglage pour l'amplification des signaux de réception, **caractérisé en ce qu'**une résistance de travail pour le récepteur (6) est formée avec le potentiomètre (12) et le potentiomètre (12) est en même temps un composant d'un réseau de rétroaction pour l'amplificateur, une caractéristique non linéaire pour la dépendance du facteur d'amplification par rapport à un réglage prédéterminé avec le potentiomètre (12) étant prédéfinie, la tension de fonctionnement étant formée par le potentiomètre (12) et une résistance (14) reliée à une première borne externe, et la deuxième borne externe du potentiomètre (12) étant reliée à des composants du réseau de rétroaction.

2. Dispositif optoélectronique (1) selon la revendication 1, **caractérisé en ce que** le potentiomètre (12) et la résistance (14) font partie du réseau de rétroaction.

3. Dispositif optoélectronique (1) selon la revendication 2, **caractérisé en ce que** le réseau de rétroaction comprend en outre une résistance (27) ou une résistance (21) et un condensateur (22).

4. Dispositif optoélectronique (1) selon l'une des revendications 1 à 3, **caractérisé en ce qu'**une résistance supplémentaire (16) est prévue en parallèle avec le potentiomètre (12), au moyen de laquelle la courbe caractéristique peut être modifiée.

5. Dispositif optoélectronique (1) selon l'une des revendications 1 à 4, **caractérisé en ce que** le potentiomètre (12) présente une prise centrale (12a) qui est reliée à un potentiel de repos de l'amplificateur.

6. Dispositif optoélectronique (1) selon l'une des revendications 1 à 5, **caractérisé en ce que** le potentiomètre (12) est un potentiomètre numérique (12).

7. Dispositif optoélectronique (1) selon la revendication 6, **caractérisé en ce que** le potentiomètre (12) est un potentiomètre numérique (12) pouvant être commandé à distance.

8. Dispositif optoélectronique (1) selon l'une quelconque des revendications 1 à 7, **caractérisé en ce que** le potentiomètre (12) peut être actionné manuellement au moyen d'un élément de commande.

9. Dispositif optoélectronique (1) selon l'une des revendications 1 à 8, **caractérisé en ce que** l'amplificateur est formé par un transistor à contre-réaction (15).

10. Dispositif optoélectronique (1) selon l'une des revendications 1 à 9, **caractérisé en ce que** l'amplificateur est formé par un amplificateur opérationnel à réaction négative (26).

11. Dispositif optoélectronique (1) selon l'une des revendications 1 à 10, **caractérisé en ce qu'**un signal binaire de détection d'objet est généré au moyen de l'unité d'évaluation.

12. Dispositif optoélectronique (1) selon l'une des revendications 1 à 11, **caractérisé en ce qu'**il est conçu comme une barrière lumineuse, un scanner de lumière ou une barrière lumineuse à réflexion.

13. Dispositif optoélectronique (1) selon l'une des revendications 1 à 12, **caractérisé en ce qu'**il est conçu comme un rideau lumineux, un rideau lumineux à réflexion ou comme une barrière lumineuse à faisceaux multiples.
